# EUROPEAN PATENT APPLICATION

(11) **EP 1 947 678 A1**
(43) Date of publication of application: **23.07.2008**
(21) Application number: 06832436.7
(22) Date of filing: 01.11.2006
(51) Int. Cl.: H01J 65/04, F21S 2/00, G03B 21/00, G03B 21/14, H05B 41/24, H05B 41/36, F21Y 101/00

(54) **PROJECTOR**

(30) Priority: 01.11.2005 JP 2005318030
(71) Applicant: Seiko Epson Corporation, Shinjuku-ku Tokyo 163-0811 (JP)
(72) Inventor: TAKEUCHI, Kesatoshi, Suwa-shi, Nagano 392-8502 (JP); TAKADA, Yutaka, Suwa-shi, Nagano 392-8502 (JP); TAKAGI, Shigekazu, Suwa-shi, Nagano 392-8502 (JP); FUJII, Satoshi, Suwa-shi, Nagano 392-8502 (JP); KAMAKURA, Hiroshi, Suwa-shi, Nagano 392-8502 (JP)
(74) Representative: HOFFMANN EITLE
(86) International application number: PCT/JP2006/322319
(87) International publication number: WO 2007/052827

(57) **Abstract**

Task

To provide a projector using a light source device that is rapidly turned on and emit light with high energy efficiency.

Means for Resolution

Microwaves having different phases are radiated from antennas to three branched light emitting areas in an electrodeless lamp. Light emitted from the three light emitting areas are radiated from one light radiating area of the electrodeless lamp. The microwaves having the maximum amplitude and a plurality of phases are sequentially radiated onto the three light emitting areas, which makes it possible for the electrodeless lamp 1 to emit light with high energy efficiency.

## Description

### Technical Field

The present invention relates to a projector including a light source device using microwaves.

### Background Art

Projectors for projecting images on the basis of image signals have been used for presentation in the meeting or home theaters. As a light source for the projector, a high-brightness light source is used to obtain a bright projected image, or a light source having an emission spectrum including red (R), green (G), and blue (B) light components, which are three primary colors of light, that are in balance is used to obtain a clear full color image.

Discharge lamps having high brightness, such as a halogen lamp, a metal halide lamp, and a high-pressure mercury lamp, have come into widespread use in the projectors on the market.

The discharge lamp needs discharge electrodes for making a discharge medium, such as gas filled in the lamp, emit light, but the discharge electrodes are abraded by discharge. The abrasion of the discharge electrodes causes the distance between the electrodes to increase, which results in a variation in the emission spectrum. When the electrodes are abraded, there has a problem in that discharge may not occur. The internal temperature and pressure of the discharge lamp need to increase and the discharge medium, such as gas, needs to be sufficiently excited until the quantity of light emitted from the discharge lamp reaches a predetermined value. In this case, it takes a predetermined amount of time to obtain the necessary amount of light.

A solid-state light source, such as LEDs (light emitting diodes) for emitting R, G, and B light components, has been proposed as a light source for a projector capable of effectively obtaining R, G, and B light components, but has not been developed yet. Further, the solid-state light source has a problem in that it is difficult to obtain necessary brightness.

In order to solve these problems, JP-A-2001-155882 discloses a projector using an electrodeless lamp as a light source device. In the light source device of the projector, a magnetron, which is a kind of vacuum tube having electrodes and a filament, generates microwaves, and the microwaves are radiated onto an electrodeless lamp having rare gas or rare-earth metal halogen compound, serving as a discharge medium, filled therein to emit light by plasma discharge. This structure makes it possible to provide a projector having an electrodeless lamp, which is a point light source having high brightness and a long life span, as a light source. The radiated microwave is not described in detail in JP-A-2001-155882, but it is guessed that the radiated microwave is a single-phase microwave from the structure in which the magnetron and the antenna form a pair.

It is necessary to preheat the magnetron for a predetermined period of time in order to start the magnetron to obtain a predetermined microwave. For example, JP-A-9-82112 discloses a power supply for an electrodeless lamp. In JP-A-9-82112, when the preheating temperature is high, the frequency characteristics of microwaves generated by the magnetron deteriorate. Therefore, temperature control is performed to reduce the preheating temperature when the electrode lamp is turned on.

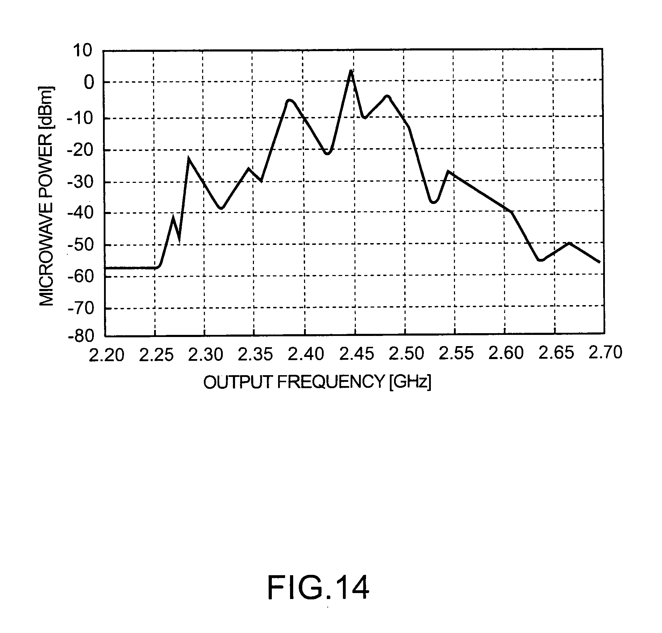

Fig. 14 is a diagram illustrating the frequency characteristics of the microwaves generated by the magnetron. The frequencies of the microwaves are distributed with the center at a frequency of about 2.45 GHz, and many noise components are included in a frequency band of about 2.25 to 2.65 GHz.

However, in the light source devices disclosed in JP-A-2001-155882 and JP-A-9-82112, the magnetron requiring preheating is used for a source for generating microwaves. Therefore, it takes a predetermined amount of time for the electrodeless lamp to start emitting light, which makes it difficult to rapidly turn on the electrodeless lamp.

As shown in Fig. 14, since the microwaves generated by the magnetron include many noise components, many noise components in an unnecessary wavelength range are included in the spectrum of light emitted from the electrodeless lamp. Further, since a single-phase microwave is used, the efficiency of energy conversion from microwave power applied into light is not very high.

Therefore, in order to obtain a predetermined quantity of light including necessary spectral components, it is necessary to set high microwave power, considering the amount of energy reduced due to the noise components.

As described above, the light source devices of the projectors according to the related art have problems in that it is difficult to rapidly turn on the light source device and the light source device does not have high energy efficiency.

In order to solve the above-mentioned problems, it is an object of the invention to provide a projector having a light source device that is rapidly turned on and has high energy efficiency.

### Disclosure of the Invention

According to an aspect of the invention, there is provided a projector for projecting an image on the basis of image information. The projector includes a light source device that is used as a light source for the projected image. The light source device includes: a plurality of solid-state high-frequency oscillators that generate microwaves; a phase control unit that adjusts each of the phases of the microwaves output from the solid-state high-frequency oscillators; amplifying units that amplify the microwaves whose phases have been adjusted by the phase control unit; and a light emitting body that has a material emitting light by the microwaves filled therein. In the projector, two or more microwaves having different phases that are output from the amplifying units are radiated onto the light emitting body.

In the projector according to the above-mentioned aspect, preferably, light emitting areas onto which a plurality of microwaves having different phases are radiated are provided in the light emitting body so as to correspond to the solid-state high-frequency oscillators, and the inner spaces of the light emitting body including the plurality of light emitting areas communicate with each other.

In the projector according to the above-mentioned aspect, preferably, the light emitting body includes a light radiating area that emits light to be used to form the projected image. Preferably, the light emitting areas are radially branched from the light radiating area, and optical waveguides that guide light emitted from the light emitting areas to the light radiating area are provided at optical ends of the light emitting areas.

In the projector according to the above-mentioned aspect, preferably, n (n is an integer equal to or greater than 2) pairs of solid-state high-frequency oscillators and amplifying units are provided, and the phase control unit adjusts the phases of the microwaves output from the solid-state high-frequency oscillators such that the microwaves have a phase difference of (2π)/n.

In the projector according to the above-mentioned aspect, preferably, the integer n is 3.

According to another aspect of the invention, there is provided a projector for projecting an image on the basis of image information. The projector includes a light source device that is used as a light source for the projected image. The light source devices includes: a plurality of solid-state high-frequency oscillators that generate microwaves; amplifying units that are provided so as to correspond to the solid-state high-frequency oscillators and amplify the microwaves generated by the solid-state high-frequency oscillators; and a plurality of color light emitting bodies that have materials emitting light by the microwaves filled therein. In the projector, the plurality of color light emitting bodies are provided so as to correspond to the amplifying units, and the light emitting materials having different emission spectra are filled in the color light emitting bodies.

In the projector according to the above-mentioned aspect, preferably, the light source device further includes a light radiating portion that emits light to be used to form the projected image. Preferably, the color light emitting bodies are radially branched from the light radiating portion and are integrally formed with the light radiating portion, and optical waveguides that guide light emitted from the color light emitting bodies to the light radiating portion are provided at optical ends of the color light emitting bodies.

In the projector according to the above-mentioned aspect, preferably, the light source device further includes a frequency control unit that adjusts the frequencies of the microwaves generated by the solid-state high-frequency oscillators.

In the projector according to the above-mentioned aspect, preferably, the light source device further includes a power control unit that adjusts an amplification factor of each of the amplifying units.

In the projector according to the above-mentioned aspect, preferably, the light source device further includes: antennas that are provided in the respective amplifying units and radiate the microwaves amplified by the amplifying units; cavities that are provided for the respective antennas, accommodate at least some of the light emitting body or the color light emitting bodies and the antennas therein and reflect the microwaves; and isolators that are provided between the amplifying units and the antennas and prevent some of the microwaves that have been radiated from the antennas and reflected from the cavities from returning to the antennas.

In the projector according to the above-mentioned aspect, preferably, the plurality of solid-state high-frequency oscillators are surface acoustic wave oscillators having surface acoustic wave resonators. Preferably, each of the surface acoustic wave resonators includes a first layer that is formed of diamond or diamond-like carbon, a piezoelectric layer that is formed on the first layer, and a comb-shaped electrode that is formed on the piezoelectric layer.

According to the above-mentioned aspect, preferably, the projector further includes light modulating devices. Preferably, the image information is image signals for defining an image. Preferably, each of the light modulating devices modulates light emitted from the light source device on the basis of the image signals to generate modulated light for forming an image, and is any one of a transmissive liquid crystal panel, a reflective liquid crystal panel, and a tilt mirror device.

In the projector according to the above-mentioned aspect, preferably, the microwaves are signals in a frequency band of 300 MHz to 30 GHz.

### Brief Description of the Drawings

Fig. 1 is a diagram schematically illustrating the structure of a projector according to a first embodiment of the invention.
Fig. 2 is a diagram schematically illustrating the structure of a microwave oscillator.
Figs. 3A is a plan view schematically illustrating a diamond SAW resonator, and Fig. 3B is a cross-sectional view schematically illustrating the diamond SAW resonator.
Fig. 4 is a diagram illustrating an example of an output frequency characteristic of the diamond SAW resonator.
Fig. 5 is a perspective view schematically illustrating the structure of a peripheral portion of a first electrodeless lamp.
Fig. 6 is a cross-sectional view of main parts of the peripheral portion of the electrodeless lamp.
Fig. 7 is a graph illustrating the phases of microwaves oscillated by microwave oscillators.
Fig. 8 is a diagram schematically illustrating the structure of an optical unit.
Fig. 9 is a diagram schematically illustrating the structure of a projector according to a second embodiment of the invention.
Fig. 10 is a perspective view schematically illustrating the structure of a peripheral portion of a second electrodeless lamp.
Fig. 11A is a cross-sectional view of main parts of the peripheral portion of an electrodeless lamp according to a first aspect, and Fig. 11B is a cross-sectional view of main parts of the peripheral portion of an electrodeless lamp according to a second aspect.
Fig. 12 is a diagram schematically illustrating the structure of a projector according to a third embodiment of the invention.
Fig. 13 is a diagram schematically illustrating the structure of a projector according to a fourth embodiment of the invention.
Fig. 14 is a diagram illustrating a frequency characteristic of microwaves generated by a magnetron.

### Best Mode for Carrying Out the Invention

Hereinafter, exemplary embodiments of the invention will be described in detail below with reference to the accompanying drawings.

### (First embodiment)

### <Outline of first projector>

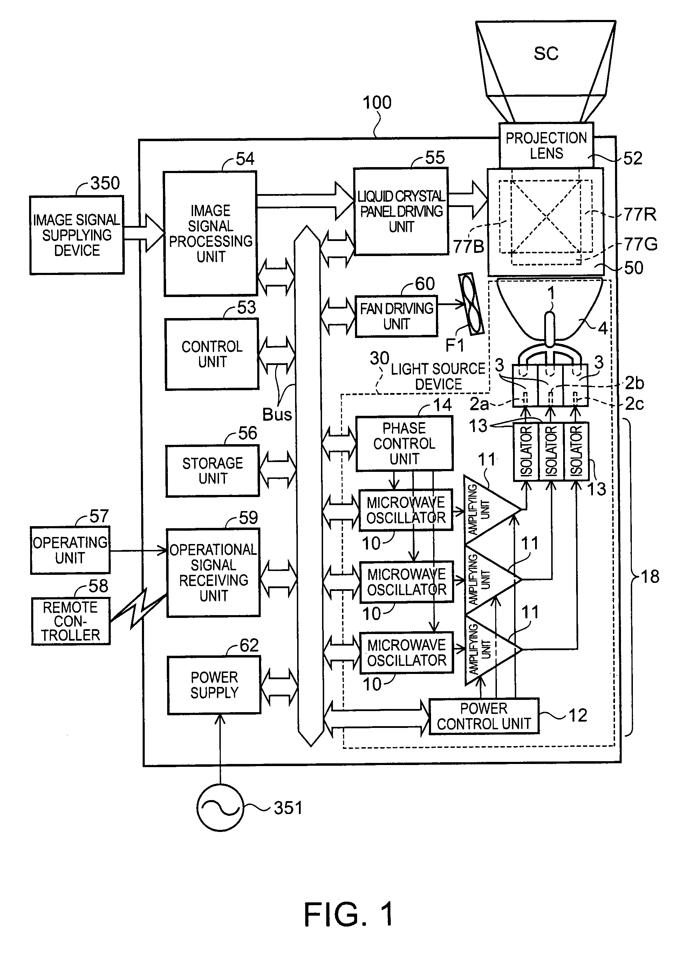

Fig. 1 is a diagram schematically illustrating the structure of a projector according to a first embodiment of the invention.

A projector 100 is a so-called projector of a three liquid crystal panel type in which light emitted from a light source device 30 is separated into three color light components, that is, red, green, and blue light components, the separated light components are modulated by red, green, and blue liquid crystal light valves 77R, 77G, and 77B, serving as light modulating devices, according to image signals, the modulated light components are combined into a full color optical image, and the full color optical image is enlarged and projected onto a screen SC by a projection lens 52. The liquid crystal light valves 77R, 77G, and 77B are provided for the red, green, and blue light components, respectively, and are included in the structure of an optical unit 50.

In the light source device 30, an electrodeless lamp 1, serving as a light emitting body (hereinafter, referred to as a light emitter), is used as a light source. A light emitting material is filled in the electrodeless lamp 1, and microwaves radiated from a plurality of antenna portions (hereinafter, referred to as antennas) 2a to 2c excite the light emitting material, thereby emitting light by means of plasma emission. The microwaves radiated from the antennas 2a to 2c are generated by corresponding microwave oscillators 10 serving as solid-state high-frequency oscillators. The high frequency means frequency in a frequency band, such as a UHF band (300 MHz to 3 GHz) or an SHF band (3 GHz to 30 GHz). The term 'solid-state high-frequency oscillator' is opposite to a gas oscillator, such as a vacuum tube using, for example, a magnetron, and means an oscillator using solid such as diamond.

### <Outline of microwave oscillator>

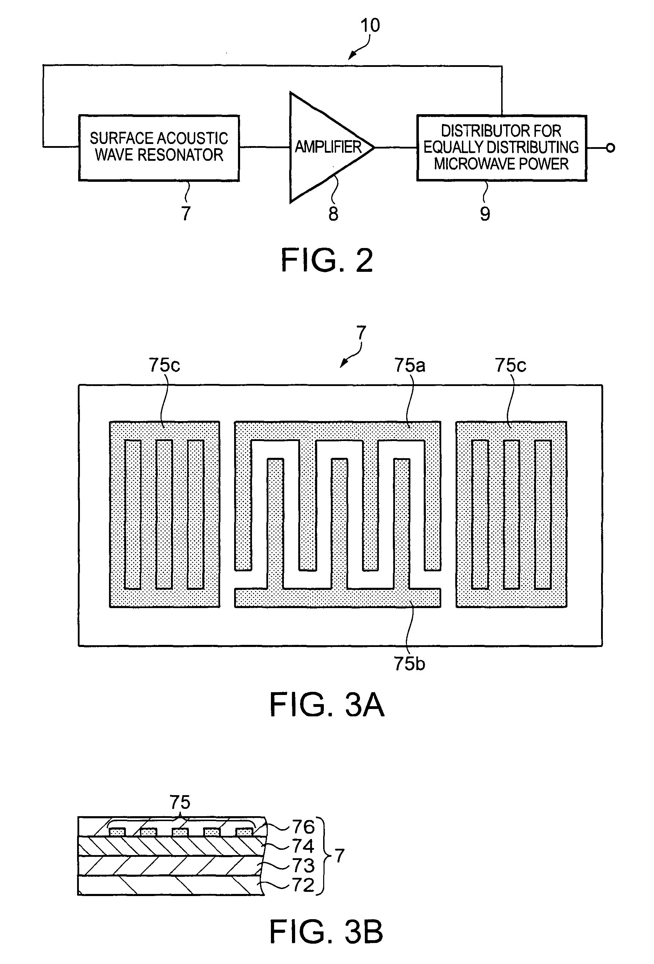

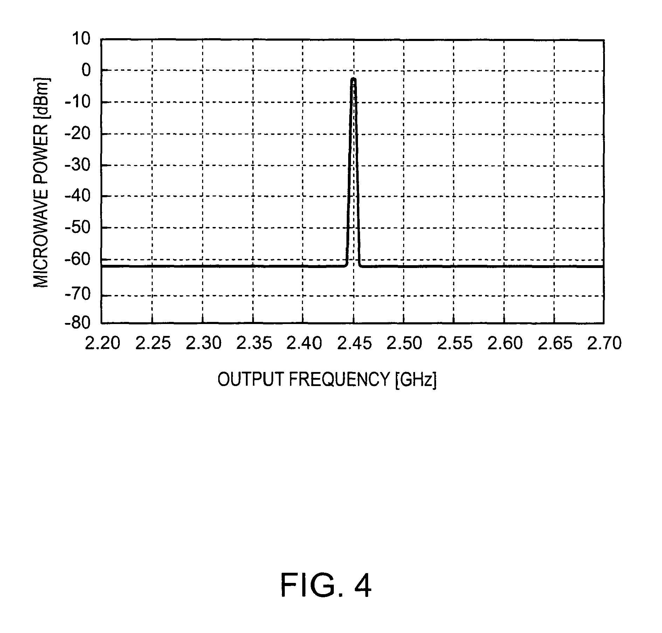

Fig. 2 is a block diagram schematically illustrating the structure of the microwave oscillator. Fig. 3A is a plan view schematically illustrating a diamond SAW resonator, and Fig. 3B is a cross-sectional view schematically illustrating the diamond SAW resonator. Fig. 4 is a diagram illustrating an example of an output frequency characteristic of the diamond SAW resonator.

Next, the microwave oscillator 10 of the light source device 30, which is one of characteristics of the invention, will be described in detail with reference to Fig. 2 and Figs. 3A and 3B.

The microwave oscillator 10 is a surface acoustic wave (hereinafter, referred to as SAW) oscillator including a surface acoustic wave resonator, and uses a SAW resonator in which a diamond monocrystalline layer is used for an elastic body transmitting surface acoustic waves.

The microwave oscillator 10 includes a SAW resonator 7, an amplifier 8, and a distributor 9 for equally distributing microwave power.

The SAW resonator 7 is a diamond SAW resonator, and the detailed structure thereof is shown in Figs. 3A and 3B.

As shown in Fig. 3B, the SAW resonator 7 includes a silicon substrate 72, serving as a base, and a diamond monocrystalline layer 73 formed on the silicon substrate 72.

A piezoelectric layer 74, such as a zinc oxide (ZnO) film, is formed on the diamond monocrystalline layer 73.

Further, an electrode 75 including a comb-shaped electrode (IDT (inter digital transducer) electrode) for exciting surface acoustic waves is provided on the piezoelectric layer 74.

A silicon oxide layer 76 is formed on the electrode 75. Since the temperature dependence of the operational frequency of the silicon oxide layer 76 is opposite to that of the diamond monocrystalline layer 73, the piezoelectric layer 74, and the electrode 75, the silicon oxide layer 76 provided on the uppermost layer makes it possible to improve the temperature characteristic.

Further, it is preferable that the diamond monocrystalline layer 73 be formed by a gas phase synthesizing method. Alternatively, a hard carbon layer having an elastic modulus close to polycrystalline diamond may be used. In addition, the piezoelectric layer 74 may be formed of AIN or Pb(Zr, Ti)O₂ other than ZnO by a sputtering method or a gas phase synthesizing method.

As shown in Fig. 3A, the electrode 75 includes IDT electrodes 75a and 75b, which are a pair of comb-shaped electrodes arranged so as to engage with each other, and a reflector electrode 75c that is provided at both sides of the IDT electrodes and reflects surface acoustic waves.

When an electric signal is input to the IDT electrode 75a, the SAW resonator 7 excites a surface acoustic wave on the base including the diamond monocrystalline layer 73 and holds the surface acoustic waves between both sides of the reflector 75c. The held surface acoustic waves are multiply reflected between both sides of the reflector 75c, which causes a stationary wave to be generated between both sides of the reflector 75c.

When the surface acoustic wave reaches the IDT electrode 75b, the SAW resonator 7 outputs an electric signal having a frequency (microwave) corresponding to the frequency of the surface acoustic wave.

Referring to Fig. 2 again, the amplifier 8 is provided in the next stage of the SAW resonator 7 and amplifies a microwave oscillated by the SAW resonator 7 into a microwave having predetermined power.

The distributor 9 equally distributes the microwave power output from the amplifier 8 to the outside and the SAW resonator 7.

The SAW resonator 7, the amplifier 8, and the distributor 9 are connected to one another such that the impedances thereof are matched to 50 ohm, and form the microwave oscillator 10, which is a feedback oscillating circuit.

The SAW resonator 7 uses diamond as an elastic body, and thus generates a surface acoustic wave having a high transmission speed higher than 10000 m/s.

This characteristic enables the microwave oscillator 10 to directly oscillate microwaves without using a frequency multiplying circuit provided with, for example, a PLL (phase locked loop) circuit. The IDT electrodes 75a and 75b of the SAW resonator 7 can be configured such that the widths thereof are larger than that of another elastic body, such as quartz or ceramic. Therefore, the IDT electrodes 75a and 75b of the SAW resonator 7 can have a good power-resistant characteristic and a small variation in frequency due to a change in temperature.

Fig. 4 is a diagram illustrating an example of an output frequency characteristic of the microwave oscillator.

As shown in Fig. 4, in the output frequency characteristic of the microwave oscillator 10, a power peak is obtained around a frequency of 2.45 GHz. Even when output microwave power is changed, little variation occurs in the frequency.

Further, the microwave oscillator 10 has the following characteristics. The microwave oscillator 10 does not need preheating, and directly oscillates a predetermined frequency in real time when power is supplied. The frequency characteristic of the microwave oscillator 10 does not vary even when microwave power increases, and little phase noise is generated.

### <Schematic structure of first projector>

The schematic structure of the projector 100 will be described with reference to Fig. 1.

The projector 100 includes the light source device 30, the optical unit 50, the projection lens 52, a control unit 53, an image signal processing unit 54, a liquid crystal panel driving unit 55, a storage unit 56, an operating unit 57, a remote controller 58, an operational signal receiving unit 59, a fan driving unit 60, and a power supply 62.

The light source device 30 includes a plurality of cavities 3, a reflector 4, a plurality of amplifying units 11, a power control unit 12, a plurality of isolators 13, and a phase control unit 14, in addition to the electrodeless lamp 1, the antennas 2a to 2c, and the plurality of microwave oscillators 10. The microwave oscillators 10, the amplifying units 11, the power control unit 12, the isolators 13, and the phase control unit 14 form a microwave circuit unit 18.

Three sets of the microwave oscillators 10, the amplifying units 11, the isolators 13, and the cavities 3 are provided to correspond to the three antennas 2a to 2c, respectively.

The cavities 3 are hollow members formed of a material reflecting microwaves, such as aluminum. The cavities 3 concentrate microwaves radiated from the antennas 2a to 2c on light emitting areas of the electrodeless lamp 1 and prevent the microwaves from leaking to the outside.

The reflector 4 reflects light emitted from the light emitting areas of the electrodeless lamp 1 to converge on a point and guides the light to the optical unit 50.

Each amplifying unit 11 is provided in the latter stage of the microwave oscillator 10 and amplifies microwave power output from the corresponding microwave oscillator 10.

The power control unit 12 is an amplification factor adjusting circuit for adjusting the amplification factors of the three amplifying units 11 in response to a control signal output from the control unit 53.

The isolators 13 are isolators for separating the microwaves reflected from the antennas 2a to 2c and consuming the separated microwaves as heat by using resistors provided therein. In this way, the isolators 13 prevent the reflected microwaves from returning to the corresponding amplifying units 11.

The phase control unit 14 is a phase adjusting circuit for adjusting the phases of microwaves oscillated by the microwave oscillators 10.

The optical unit 50 includes an integrator illumination optical system that converts light emitted from the electrodeless lamp 1 into light having a stable brightness distribution, a separating optical system that separates the light having a stable brightness distribution into three primary color light components, that is, a red light component, a green light component, and a blue light component, and supplies the separated red, green, and blue light components to red, green, and blue liquid crystal light valves 77R, 77G, and 77B, respectively, and a combining optical system that combines light components modulated by the red, green, and blue liquid crystal light valves in response to image signals to generate full color modulated light. The optical unit 50 will be described in detail later.

The projection lens 52 includes a zoom lens. The projection lens 52 enlarges the full color modulated light emitted from the optical unit 50 and projects the enlarged full color image onto the screen SC.

The control unit 53 is a central processing unit (CPU) and controls the projector 100 by means of communication with components including the light source device 30 through a bus line Bus.

The image signal processing unit 54 is provided with, for example, an image converter for converting analog image signals input from an external image signal supplying apparatus 350, such as a personal computer, into digital signals, a scaler (not shown), and a frame memory (not shown) .

The image signal processing unit 54 converts input analog image signals, such as R, G, and B signals or components signals, into digital signals by using the image converter and performs image processing, such as scaling, on the digital image signals.

The image signal processing unit 54 writes to the frame memory an image represented by R, G, and B image signals at resolution of the image signals, converts the image into an image having a resolution that can be displayed by the liquid crystal light valves 77R, 77G, and 77B, and reads out the converted image to generate image signals suitable for the corresponding liquid crystal light valves. A trapezoid correcting process for shaping an effective image projected onto the screen SC into a rectangle is performed together with the scaling process.

The liquid crystal panel driving unit 55 is a liquid crystal panel driver that supplies image signals subjected to image processing and a driving voltage to the liquid crystal light valves 77R, 77G, and 77B and outputs images to the corresponding liquid crystal light valves.

The storage unit 56 is composed of a non-volatile memory, such as a mask ROM, a flash memory, or a ferroelectric memory (FeRAM). The storage unit 56 stores various programs for controlling the operation of the projector, such as a start program that defines the content and procedure for starting the projector 100, including an operation of turning on the light source device 30, and additive data.

For example, the programs include a phase adjusting program for allowing the phase control unit 14 of the light source device 30 to optimally adjust the phase of microwaves oscillated by the three microwave oscillators 10.

The operating unit 57 is provided on the upper surface of the main body of the projector 100 and includes a plurality of operating buttons (not shown) for operating the projector 100. The plurality of operating buttons include a 'power button' for starting or shutting down the projector 100, a 'menu button' for displaying menu for various operations, and a 'brightness adjusting button' for adjusting the brightness of a projected image.

The remote controller 58 is a remote controller for operating the projector 100 by remote control, and includes a plurality of operating buttons for operating the projector 100, similar to the operating unit 57.

When an operator operates the operating unit 57 or the remote controller 58, the operational signal receiving unit 59 receives operational signals and transmits the operational signals for triggering various operations to the control unit 53.

The fan driving unit 60 is a driving circuit for rotating a fan F1, which is an axial flow fan, in response to the control signal output from the control unit 53. The fan is not limited to the axial flow fan. For example, a Sirocco fan for concentratively supplying air around the liquid crystal light valves 77R, 77G, and 77B or the cavities 3 may be further provided.

The power supply 62 is supplied with an AC voltage through an inlet from an external power source 351, converts the AC voltage into a DC voltage by using an AC/DC converter (not shown) provided therein, rectifies and smoothes the DC voltage, and supplies a stabilized DC voltage to all components of the projector 100.

### <Detailed structure of first electrodeless lamp>

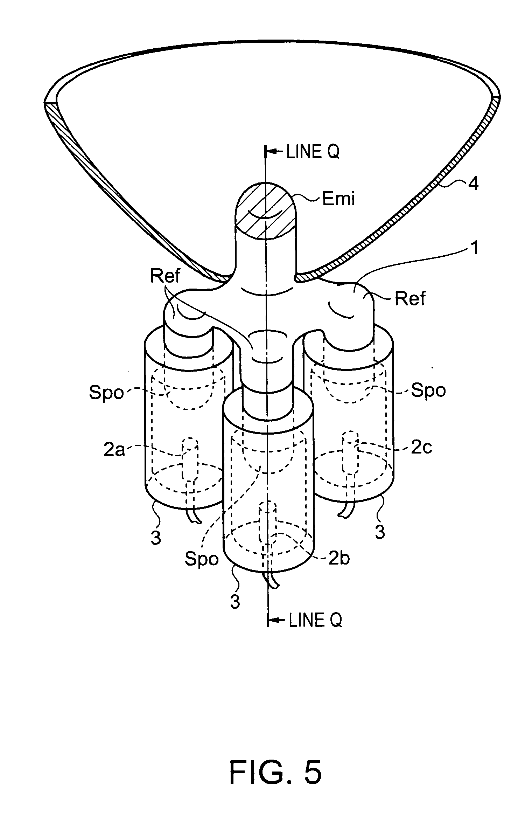

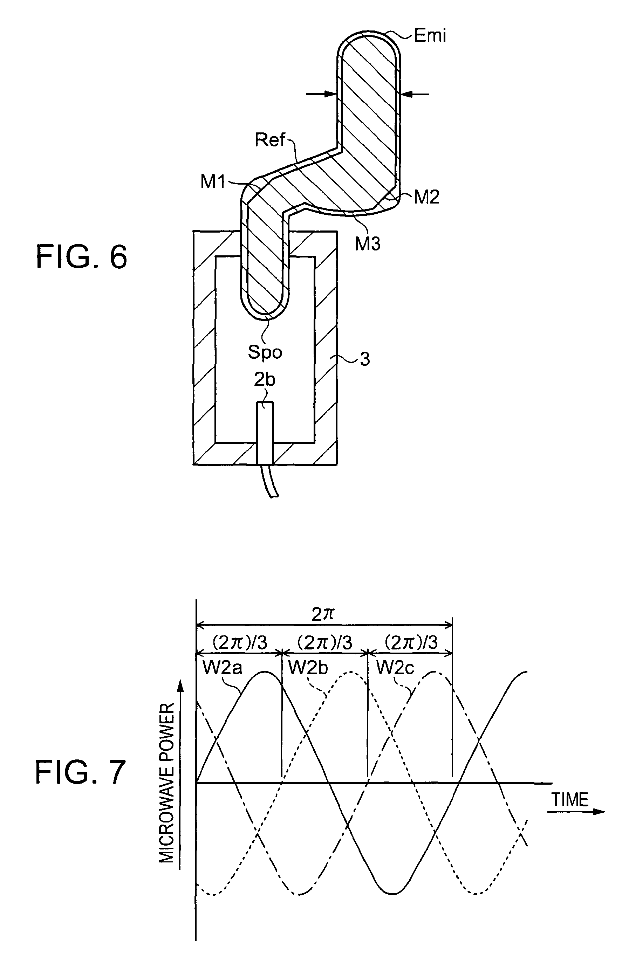

Fig. 5 is a perspective view schematically illustrating the structure of a peripheral portion of the first electrodeless lamp. Fig. 6 is a cross-sectional view illustrating the main parts of the peripheral portion of the electrodeless lamp. In Fig. 5, the reflector 4 is shown in sectional view for the purpose of convenience of the explanation.

Next, the schematic structure of the electrodeless lamp 1, serving as the first electrodeless lamp, and a peripheral portion thereof will be described with reference to Figs. 5 and 6. Three-phase current microwaves are supplied to the electrodeless lamp 1, which is a preferable aspect of the invention.

The electrodeless lamp 1 is formed in a hollow shape of transmissive inorganic glass having heat resistance, such as quartz glass, and is filled with a light emitting material that is excited by a microwave to emit light by means of plasma emission. In addition, the electrodeless lamp 1 does not have electrodes.

The light emitting material filled in the electrodeless lamp 1 may be neon gas, argon gas, krypton gas, xenon gas, or halogen gas. A metallic material, such as mercury or sodium, or a metal compound may be filled into the electrodeless lamp 1 together with the gas. In addition, the light emitting material may be a solid.

The electrodeless lamp 1 is divided into three main portions, that is, a plurality of light emitting areas Spo, a plurality of optical waveguides Ref, and a light radiating area Emi.

Three light emitting areas Spo corresponding to the antennas 2a to 2c are provided, and each of the three light emitting areas Spo is arranged in the corresponding cavity 3 so as to face the corresponding antenna. Since the light emitting area Spo is transparent, the microwaves radiated from the antennas 2a to 2c are absorbed to an internal discharged material. The light emitting areas Spo are radially branched from the light emitting area Emi.

The optical waveguide Ref is an optical system for guiding light emitted from the corresponding light emitting area Spo by plasma emission to the light radiating area Emi. A reflective layer formed of, for example, aluminum is provided on the inner surface of the optical waveguide Ref. The reflective layer guides light emitted from the light emitting area Spo to the light radiating area Emi and prevents microwaves or light from leaking from the optical waveguide Ref to the outside.

The light radiating area Emi is represented by a hatched portion in Fig. 5, and is transparent. Light emitted from the light emitting areas Spo and concentrated by the optical waveguides Ref is emitted to the outside through the light radiating area Emi. Since the light radiating area Emi is disposed at a substantially focal point of the reflector 4, light emitted from the light radiating area Emi is concentrated without leakage and is then emitted to the optical unit 50.

Fig. 6 is a cross-sectional view taken long the line Q of Fig. 5.

The light emitting area Spo is provided in the cavity 3 so as to protrude with substantially the same length as the antenna 2b. The internal reflective layer is not provided in the protruding portion.

The reflective layer is provided on the entire inner surface of the optical waveguide Ref, and the reflective layer is also formed up to the lower portion of the light radiating area Emi that is represented by arrow. A plurality of reflecting surfaces M1 to M3 for reflecting light emitted from the light emitting area Spo by plasma emission and guiding the light to the light radiating area Emi are provided on the inner surface of the optical waveguide Ref. The reflective layer is also formed on the reflecting surfaces M1 to M3.

The reflecting surface M1 reflects light from the light emitting area Spo to the reflecting surface M2. The reflecting surface M2 reflects the light reflected from the reflecting surface M1 to the light radiating area Emi.

The reflecting surface M3 is a concave mirror having the light radiating area Emi as a focal point, and reflects light traveling all directions in the optical waveguide Ref to the light radiating area Emi.

In this way, light generated in the optical waveguide Ref and the light emitting area Spo is concentrated on the light radiating area Emi.

In this embodiment, the reflective layer is provided on the inner surface of the optical waveguide Ref, but the invention is not limited thereto. For example, the reflective layer may be provided on the outer surface of the optical waveguide Ref. In this case, it is easy to provide the reflective layer from the viewpoint of manufacture. Since the glass substrate, which is a base, serves as an optical waveguide member, it is easy to concentrate light on the light radiating area Emi.

The protruding length of the antenna 2b in the cavity 3 is preferably a quarter of the wavelength λ where the radiation efficiency of microwaves is high. Since the wavelength λ is determined by a dielectric constant of a dielectric, it is possible to decrease the length of the antenna 2b by filling a high molecular material having a large dielectric constant in the cavity. Alternatively, a helical antenna can be used to decrease the length of the antenna 2b. This is similarly applied to the antennas 2a and 2c.

The inner surface of the cavity 3 formed of a metallic material for reflecting microwaves, such as aluminum, is composed of a mirror surface, and effectively reflects microwaves radiated from the antenna 2b to the light emitting area Spo. The shape of the inner surface of the cavity 3 is not limited to a cylindrical shape. For example, the shape of the inner surface of the cavity 3 may be a curved surface having a curvature capable of effectively reflecting microwaves radiated from the antenna 2b to the light emitting area Spo.

Further, the cavity 3 may be formed of synthetic resin, and a dielectric material for reflecting microwaves may be coated on the inner surface of the cavity 3.

### <Lighting aspect of first electrodeless lamp>

Fig. 7 is a graph illustrating the phases of microwaves oscillated by the microwave oscillator.

The lighting aspect of the electrodeless lamp 1 having the above-mentioned structure will be described with reference to Figs. 1 and 5 and Figs. 6 and 7.

The optical device 30 according to this embodiment of the invention oscillates microwaves having different phases from the three antennas 2a to 2c to turn on the electrodeless lamp 1.

More specifically, the control unit 53 controls the phase control unit 14 to output microwaves having the phases shown in Fig. 7 from the microwave oscillators 10 corresponding to the three antennas 2a to 2c.

The microwave oscillator 10 corresponding to the antenna 2a oscillates a microwave W2a having a reference phase.

The microwave oscillator 10 corresponding to the antenna 2b oscillates a microwave W2b whose phase lags the phase of the microwave W2a by (2π)/3.

The microwave oscillator 10 corresponding to the antenna 2c oscillates a microwave W2c whose phase lags the phase of the microwave W2b by (2π)/3.

A phase difference among the microwaves W2a to W2c is (2π)/3, and energy loss is small. In addition, a three-phase current has a larger amount of energy than a single-phase alternating current. The adjustment of the phases of the microwaves W2a to W2c are executed by the phase adjusting program stored in the storage unit 56, and the phase adjusting program is executed while the electrodeless lamp 1 is in an on state.

The number of phases of the microwaves is not limited to three. For example, microwaves having a plurality of phases, for example, four phases or six phases may be used. In this case, when the number of phases is n, a phase difference among the microwaves is (2π)/n.

Next, the principle of the lighting of the electrodeless lamp 1 by means of microwaves radiated from, for example, the antenna 2b will be described below.

In Fig. 6, the microwave W2b radiated from the antenna 2b is reflected from the inner surface of the cavity 3 to be incident on the light emitting area Spo of the electrodeless lamp 1.

When the microwave is incident on a light emitting material of the light emitting area Spo, the light emitting material is excited to emit light by means of plasma emission. In this case, the light emitting material is evaporated and dissociated into particles in a high-temperature portion onto which the microwave W2b is radiated, and then emits light by means of plasma discharge. Then, the particles move to a low-temperature portion in the electrodeless lamp 1, and are then condensed to the original light emitting material.

In order for the electrodeless lamp 1 to continuously emit light, a structure for preventing microwave power from being concentrated on a point and allowing the convection of the light emitting material is needed such that the cycle of evaporation, dissociation, and condensation of the light emitting material is repeated.

In Fig. 5, in the electrodeless lamp 1, the microwaves W2a to W2c having different phases are radiated onto the three branched light emitting areas Spo.

Further, in the electrodeless lamp 1, the cavities and the optical waveguides are formed of hollow members so as to communicate with each other. Therefore, the light emitting material is circulated by convection in the electrodeless lamp 1 with a high degree of freedom.

This structure makes it possible for the electrodeless lamp 1 of the light source device 30 to continue to stably emit light.

### <Schematic structure of optical unit>

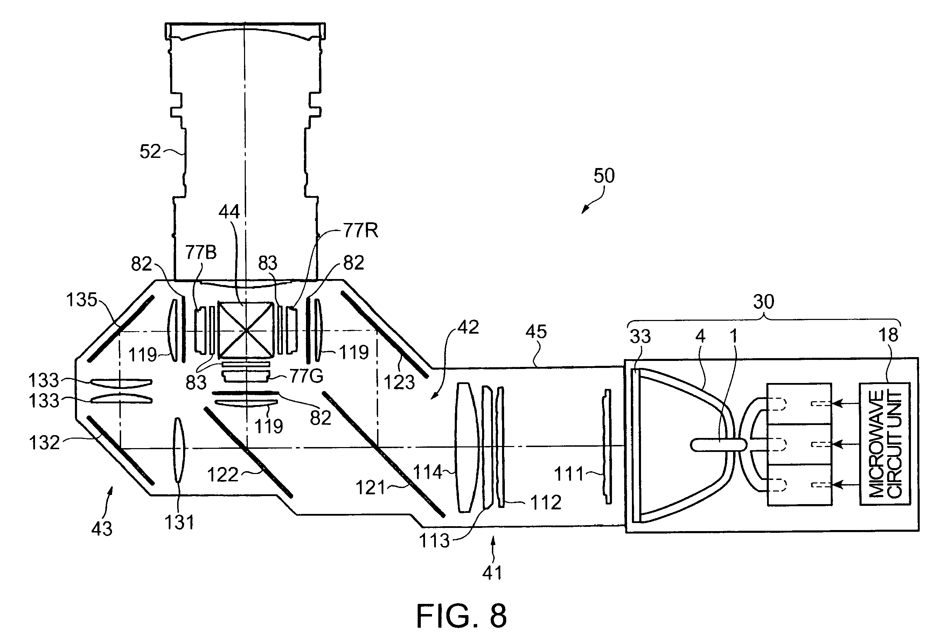

Fig. 8 is a diagram schematically illustrating the structure of a peripheral portion of the optical unit.

A supplementary description of the optical device 30 will be made and the schematic structure of the optical unit 50 will be described below.

The optical device 30 further includes a lid-shaped protective glass 33 provided on the emission surface of the reflector 4, in addition to the above-mentioned components, and the protective glass 33 is integrated with the optical device 30.

The protective glass 33 is provided in a lid shape on the concave surface of the reflector 4, and prevents dust from entering into the electrodeless lamp 1 when the optical device 30 is detached from the projector 100 or prevents broken pieces of the electrodeless lamp 1 due to a drop from being dispersed. A dielectric film for shielding microwaves may be coated on the protective glass 33, or a metal mesh having a pitch sufficiently smaller than the wavelength λ may be inserted into the projective glass 33.

Subsequently, the schematic structure of the optical unit 50 will be described.

The optical unit 50 includes an integrator illumination optical system 41, a color separating optical system 42, a relay optical system 43, the liquid crystal light valves 77R, 77G, and 77B, and a combining optical device 44.

The components of the optical unit 50 are integrally provided in an optical part case 45 as a unit.

The integrator illumination optical system 41 is an optical system that uniformizes the illuminance of the plane on which light beams emitted from the light source device 30 are incident and which is orthogonal to the optical axis direction of the light beam (which is represented by a one-dot chain line. The integrator illumination optical system 41 includes a first lens array 111, a second lens array 112, a polarizing element 113, and a superimposing lens 114.

The first lens array 111 includes small lenses that are arranged in a matrix, and each of the small lenses has a substantially rectangular shape as viewed from the optical axis direction of the light beam. Each small lens divides a light beam emitted from the light source device 30 into partial light beams and emits the partial light beams in the optical axis direction thereof.

The second lens array 112 has substantially the same structure as the first lens array 111, and includes small lenses that are arranged in a matrix. The second lens array 112 superimposes the light beams having passed through the small lenses of the first lens array 111 on the liquid crystal light valves 77R, 77G, and 77B together with the superimposing lens 114, thereby making the illuminance of the light beams uniform.

The polarizing element 113 is an optical element that converts light having two types of polarized components emitted from the electrodeless lamp 1 as the main components into one type of polarized light that can be modulated by the liquid crystal light valves 77R, 77G, and 77B.

More specifically, light including two types of polarized components that has passed through the second lens array 112 is converted into one type of polarized light by the polarizing element 113 and is finally substantially superimposed on the liquid crystal light valves 77R, 77G, and 77B by the superimposing lens 114.

In this case, the polarized light accounting for about 50% of all light beams is converted into polarized light that can be modulated by the liquid crystal light valves by the polarizing element 113, which makes it possible to improve the usage efficiency of light. When the polarizing element 113 is not provided, the polarized light accounting for half the light beams is consumed as heat.

The color separating optical system 42 includes two dichroic mirrors 121 and 122 and a reflecting mirror 123. A plurality of partial light beams emitted from the integrator illumination optical system 41 are separated into three light beams, that is, red (R), green (G), and blue (B) light components by the two dichroic mirrors 121 and 122.

The dichroic mirror 121 is an optical element including a dielectric multi-layer film that transmits the green light component and the blue light component but reflects the red light component.

The dichroic mirror 121 transmits the green light component and the blue light component, but reflects the red light component among light beams emitted from the integrator illumination optical system 41. The reflected red light component is also reflected from the reflecting mirror 123 to be incident on the red liquid crystal light valve 77R through a field lens 119.

The field lens 119 converts the light beams passing through the second lens array 112 into light beams parallel to the central axis (main light beam) thereof. The field lenses 119 provided on the incident sides of the blue and green liquid crystal light valves 77B and 77G have the same function as the field lens 119 provided on the incident side of the red liquid crystal light valve 77R.

The dichroic mirror 122 is an optical element including a dielectric multi-layer film that transmits the blue light component but reflects the green light component.

The dichroic mirror 122 reflects the green light component of the blue light component and the green light component passing through the dichroic mirror 121. The reflected green light component is incident on the green liquid crystal light valve 77G through the field lens 119.

The blue light component passing through the dichroic mirror 122 is incident on the blue liquid crystal light valve 77B through the relay optical system 43 and the field lens 119.

The relay optical system 43 includes an incident-side lens 131, a pair of relay lenses 133, and reflecting mirrors 132 and 135. The relay optical system 43 guides the blue light component separated by the color separating optical system 42 to the blue liquid crystal panel 77B.

The relay optical system 43 is used for the blue light component in order to prevent a reduction in the usage efficiency of light due to the scattering of light, since the length of the optical path of the blue light component is larger than those of the other light components. That is, the relay optical system is used for the blue light component in order to transmit the partial light beam incident on the incident-side lens 131 to the field lens 119. In this embodiment, the relay optical system 43 transmits the blue light component among the three light components, but the invention is not limited thereto. For example, the relay optical system 43 may transmit the red light component by changing the functions of the dichroic mirrors 121 and 122.

Incident-side polarizing plates 82 on which the light components separated by the color separating optical system 42 are incident are provided on the incident sides of the liquid crystal light valves 77R, 77G, and 77B, and emission-side polarizing plates 83 are provided on the emission sides of the liquid crystal light valves 77R, 77G, and 77B.

The incident-side polarizing plates 82 and the emission-side polarizing plates 83 transmit light components polarized in a predetermined direction among the light beams separated by the color separating optical system 42 and absorb the other light beams. Each of the polarizing plates is formed of a laminate of a substrate made of sapphire glass and a polarizing film formed on the substrate.

Each of the liquid crystal light valves 77R, 77G, and 77B uses polysilicon thin film transistors (TFTs) as switching elements, and includes a pair of transparent substrates opposite to each other and a liquid crystal layer interposed therebetween.

The liquid crystal light valves 77R, 77G, and 77B, which are transmissive liquid crystal panels, modulate the red, green, and blue light components incident thereon through the incident-side polarizing plates 82 according to red, green, and blue image information and emit the modulated red, green, and blue light components through the corresponding emission-side polarizing plates 83.

The combining optical system 44 is a cross dichroic prism that combines the modulated red, green, and blue light components emitted from the corresponding emission-side polarizing plates 83 and emits modulated light indicating a full color image.

In the combining optical system 44, the dielectric multi-layer film for reflecting the red light component and the dielectric multi-layer film for reflecting the blue light component are provided in an X shape along the interfaces among four right-angled prisms, and the dielectric multi-layer films combine the three light components.

The modulated light combined by the combining optical system 44 is enlarged by the projection lens 52 and is then projected onto the screen SC.

The liquid crystal light valves 77R, 77G, and 77B, the three emission-side polarizing plates 83, and the combining optical system 44 are integrated into one unit.

As described above, according to this embodiment, the following effects are obtained.
(1) The microwave oscillator 10 is a diamond SAW oscillator provided with a diamond SAW resonator. Therefore, the microwave oscillator 10 generates microwaves immediately after being supplied with power and thus can rapidly turn on the electrodeless lamp 1. In addition, the microwave oscillator 10 has a small size, high power resistance, and a small variation in frequency although the temperature varies.
   The microwave oscillated by the microwave oscillator 10 is amplified by the amplifying unit 11 and is then radiated from the antenna provided in the cavity 3. Therefore, the microwave is kept in the cavity 3.
   Therefore, the microwave does not leak to the outside of the cavity 3, which makes it possible to prevent the microwave from having an adverse effect on medical instruments or wireless communication apparatuses, such as WLAN, Home RF, Zigbee (registered trademark), and Bluetooth (registered trademark) used in an ISM band.
   Further, two or more microwaves having different phases output from the amplifying units 11 are radiated onto the electrodeless lamp 1, and thus microwaves having a plurality of phases with the maximum amplitude are sequentially supplied. Thus, it is possible make the electrodeless lamp 1 to emit light with high efficiency.
   Therefore, according to this embodiment of the invention, it is possible to provide the projector 100 including the light source device 30 capable of being rapidly turned on and emitting light with high efficiency.
(2) The microwaves W2a to W2c having different phases are radiated onto three branched light emitting areas Spo in the electrodeless lamp 1. Therefore, energy is dispersed to a plurality of points without being concentrated on one point.
   Furthermore, a plurality of light emitting areas Spo communicate with one another in the electrodeless lamp 1. Therefore, the cycle of evaporation, dissociation, and condensation of a light emitting material is not hindered, and the light emitting material is continuously circulated by convection in the electrodeless lamp 1 while emitting light.
   Therefore, it is possible to effectively convert microwave power into optical energy.
   As a result, according to this embodiment of the invention, it is possible to provide the projector 100 including the light source device 30 with high energy efficiency.
(3) Each optical waveguide Ref for guiding light emitted from the corresponding light emitting area to the light radiating area Emi is provided on the upper part of the corresponding light emitting area Spo. Therefore, light components emitted from the corresponding light emitting areas Spo are concentrated on the light radiating area Emi by the optical waveguides Ref.
   Therefore, light components are concentrated on a plurality of light emitting areas Spo without leaking to the outside, and the light components are used as a light source of a projected image, which makes it possible to improve energy efficiency and increase the quantity of light.
   As a result, according to this embodiment of the invention, it is possible to provide the projector 100 including the light source device 30 with high energy efficiency and high brightness.
(4) The phase control unit 14 adjusts the phases of microwaves W2a to W2c output from the microwave oscillators 10 such that the microwaves W2a to W2c have a phase different of (2π)/3. Therefore, microwaves having different phases are radiated onto the three light emitting areas Spo of the electrodeless lamp 1, and are concentrated on the light radiating area Emi.
   In this way, a three-phase microwave having microwave power larger than that of a single-phase alternating current is converted into light with high energy efficiency.
   As a result, according to this embodiment of the invention, it is possible to provide the projector 100 including the light source device 30 with high energy efficiency and high brightness.
(5) The light source device 30 includes the power control unit 12 for adjusting the amplification factor of each of the amplifying units 11. Therefore, the adjustment of microwave power makes it possible for the electrodeless lamp 1 to emit light with a desired amount of light.
   As a result, according to this embodiment of the invention, it is possible to provide the projector 100 including the light source device 30 capable of obtaining a desired amount of light.
(6) Each of the isolators 13 is provided in the latter stage of the amplifying unit 11 to shield a reflected wave. Therefore, the isolators 13 can prevent the reflected wave from returning to the amplifying unit 11.
   Thus, the isolators 13 can protect the amplifying unit 11 and the microwave oscillator 10 provided in the previous stage thereof from the reflected microwave.
   As a result, according to this embodiment of the invention, it is possible to provide the projector 100 including the light source device 30 capable of stably operating.
(7) The projector 100 includes the high-brightness light source device 30 capable of obtaining a desired amount of light and the liquid crystal light valves 77R, 77G, and 77B each of which converts light emitted from the light source device 30 into modulated light having a clear color in response to image signals.
   As a result, according to this embodiment of the invention, it is possible to provide the projector 100 capable of obtaining a clear projected image.

### (Second embodiment)

### <Outline of second projector>

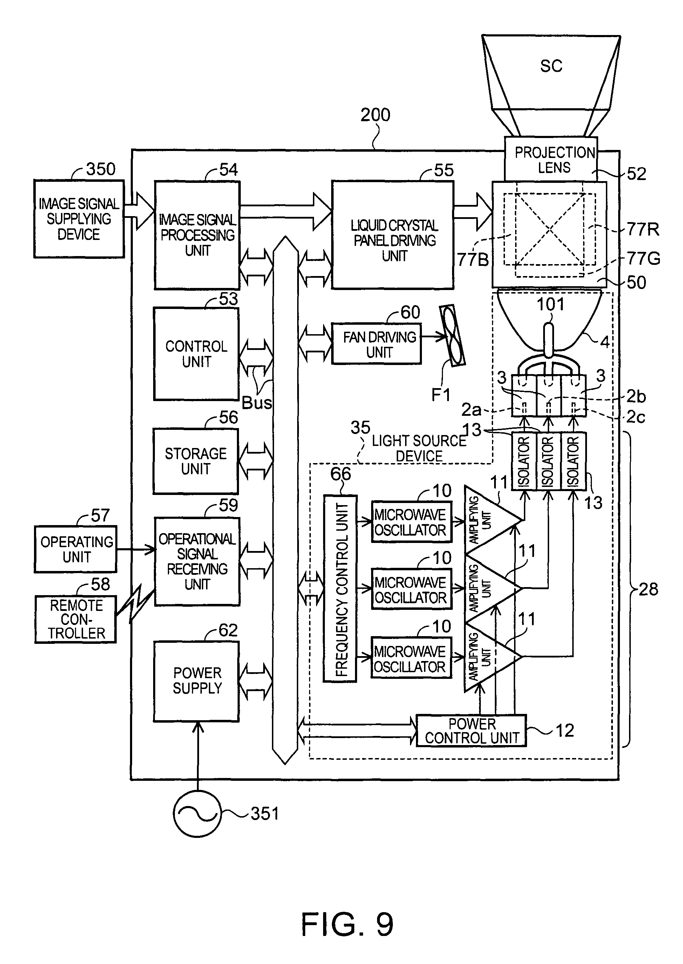

Fig. 9 is a diagram schematically illustrating the structure of a projector according to a second embodiment of the invention.

A projector 200 according to the second embodiment is similar to the projector 100 according to the first embodiment except for the following three points.

First, an electrodeless lamp 101 of the projector 200 has a different structure from that of the electrodeless lamp 1 (Fig. 5).

Second, instead of the phase control unit 14 (Fig. 1), a frequency control unit 66 is provided in a light source device 35 of the projector 200.

Third, a storage unit 56 of the projector 200 stores programs, and some of the programs are different from those in the projector 100.

In the second embodiment, the same components as those in the projector 100 according to the first embodiment have the same reference numerals, and the schematic structure of the projector 200 will be described, centered on the above-mentioned three different points.

First, a microwave circuit unit 28 of the light source device 35 will be described with reference to Fig. 9.

The microwave circuit unit 28 includes the frequency control unit 66 in addition to the plurality of microwave oscillators 10, the plurality of amplifying units 11, the power control unit 12, and the plurality of isolators 13 described in the first embodiment.

The frequency control unit 66 is a frequency adjusting circuit that adjusts the frequencies of microwaves oscillated by the plurality of microwave oscillators 10. The frequency control unit 66 can stop oscillating the microwaves by setting an oscillation frequency to zero and thus control the start/stop of oscillation.

The frequency control unit 66 adjusts the frequencies of the microwaves oscillated by the microwave oscillators 10 according to a frequency adjusting program stored in the storage unit 56 when the electrodeless lamp 101 is turned on.

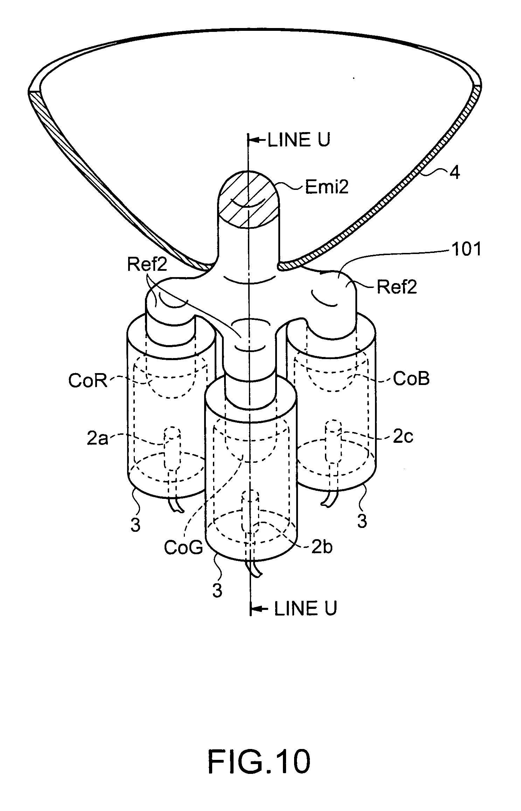

Adjustment information and frequencies for allowing color light emitting bodies (hereinafter, referred to as color light emitting members) CoR, CoG, and CoB (Fig. 10) corresponding to the microwave oscillators 10 to emit light with the maximum efficiency are defined in the frequency adjusting program stored in the storage unit 56.

### <Detailed description of second electrodeless lamp>

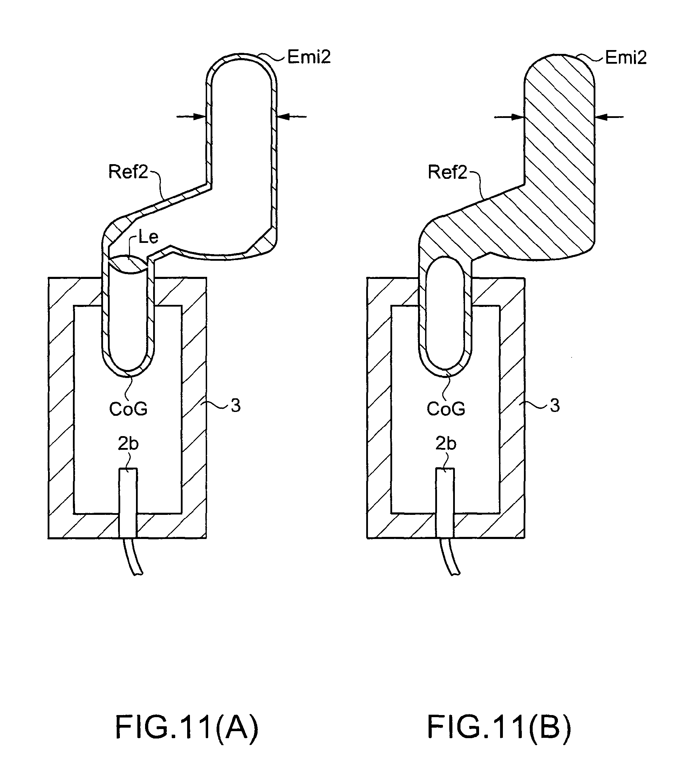

Fig. 10 is a perspective view schematically illustrating the structure of a peripheral portion of the second electrodeless lamp. Figs. 11A and 11B are cross-sectional views illustrating main parts of the peripheral portion of the electrodeless lamp. In Fig. 10, a reflector 4 is shown in sectional view for the purpose of convenience of the explanation.

The schematic structure of the electrodeless lamp 101, serving as the second electrodeless lamp, will be described with reference to Fig. 10 and Figs. 11A and 11B. In this embodiment, a description of the same components as those of the electrodeless lamp 1 will be omitted.

The electrodeless lamp 101 a plurality of light emitting members CoR, CoG, and CoB, a plurality of optical waveguides Ref2, and a light radiating portion Emi2.

Light emitting materials having different emission spectra are filled into the plurality of light emitting members CoR, CoG, and CoB. Spaces having the light emitting materials filled therein are independently provided. It is preferable that the light emitting materials have rare gases having red, green, and blue emission spectra as the main components.

A light emitting material having a red emission spectrum is filled into the light emitting member CoR corresponding to an antenna 2a.

A light emitting material having a green emission spectrum is filled into the light emitting member CoG corresponding to an antenna 2b.

A light emitting material having a blue emission spectrum is filled into the light emitting member CoB corresponding to an antenna 2c.

The optical waveguides Ref2 are optical systems for guiding light components emitted from the light emitting members CoR, CoG, and CoB by plasma emission to the light radiating portion Emi2.

A reflective layer formed of, for example, aluminum is provided on the outer surface of the optical waveguide Ref2. The reflective layer guides light components emitted from the light emitting members CoR, CoG, and CoB to the light radiating portion Emi2 and prevents microwaves or light from leaking from the optical waveguide Ref2 to the outside.

The light radiating portion Emi2 is represented by a hatched portion in Fig. 10, and is transparent. The light components emitted from the light emitting members CoR, CoG, and CoB and concentrated by the optical waveguides Ref2 are emitted to the outside through the light radiating portion Emi2.

Since the light radiating portion Emi2 is disposed at a substantially focal point of the reflector 4, light emitted from the light radiating portion Emi2 is concentrated without leakage and is then emitted to the optical unit 50.

The red, green, and blue light components are combined into substantially white light, and thus the substantially white light is emitted from the light radiating portion Emi2.

Fig. 11A is a first aspect of the cross-sectional view of Fig. 10 taken along the line U.

The light emitting member CoG is provided in the cavity 3 so as to protrude with substantially the same length as the antenna 2b. The external reflective layer is not provided in the protruding area.

The light emitting material having a green emission spectrum is filled into the light emitting member CoG, and the space of the light emitting member CoG having the light emitting material filled therein is separated from the optical waveguide Ref2 by a lens Le.

The lens Le condenses light emitted from the light emitting member CoG on the optical waveguide Ref2.

The reflective layer is provided on the entire outer surface of the optical waveguide Ref2, and the reflective layer is also formed up to the lower part of the light radiating portion Emi2 that is represented by arrow.

Light incident on the optical waveguide Ref2 passes through glass on the outer wall of the optical waveguide Ref2 and is repeatedly reflected from the external reflective layer to be concentrated on the light radiating portion Emi2.

Fig. 11B is a second aspect of the cross-sectional view of Fig. 10 taken along the line U.

The second aspect is similar to the first aspect except for the following two different points.

First, the inner surface of the optical waveguide Ref2 is formed of the same material as that forming the outer wall thereof. A reflective layer is provided on the outer surface of the optical waveguide Ref2.

Second, in the second aspect, the lens Le is not provided.

Light emitted from the light emitting member CoG is incident on a glass member in the optical waveguide Ref2 and passes through the glass member. Then, the light is repeatedly reflected from the external reflective layer to be concentrated on the light radiating portion Emi2.

Since the optical waveguide Ref2 serves as a rod integrator for repeatedly reflecting light to make the illuminance of light uniform, light emitted from the light radiating portion Emi2 has little illuminance irregularity.

The structure of the cavities 3 and the protruding length of the antenna 2b are the same as those in the electrodeless lamp 1.

### <Lighting aspect of second electrodeless lamp>

Next, a lighting aspect of the electrodeless lamp 101 having the above-mentioned structure will be described with reference to Figs. 9 and 10.

The optical unit 35 according to this embodiment of the invention oscillates microwaves having frequencies for allowing the light emitting members CoR, CoG, and CoB respectively corresponding to the three antennas 2a to 2c to emit light with the maximum efficiency to turn on the electrodeless lamp 101.

More specifically, the control unit 53 controls the frequency control unit 66 to output microwaves having the following frequencies from the microwave oscillators 10 corresponding to the three antennas 2a to 2c.

The microwave oscillator 10 corresponding to the antenna 2a outputs a microwave having a frequency for allowing the light emitting material having a red emission spectrum that is filled in the light emitting member CoR to emit light with the maximum efficiency.

The microwave oscillator 10 corresponding to the antenna 2b outputs a microwave having a frequency for allowing the light emitting material having a green emission spectrum that is filled in the light emitting member CoG to emit light with the maximum efficiency.

The microwave oscillator 10 corresponding to the antenna 2c outputs a microwave having a frequency for allowing the light emitting material having a blue emission spectrum that is filled in the light emitting member CoB to emit light with the maximum efficiency.

Further, the control unit 53 controls the power control unit 12 to adjust the amplification factor of each of the amplifying units 11 to radiate microwave power having energy capable of obtaining appropriate R, G, and B light components required for a clear projected image to the light emitting members CoR, CoG, and CoB.

The amplification factor of each microwave oscillator is defined in adjustment information of the frequency adjusting program.

In this way, the electrodeless lamp 101 of the light source device 35 continuously emits a necessary amount of light obtained by combining only the necessary light components.

In this embodiment, the light source device 35 emits substantially white light, but the invention is not limited thereto. For example, the light source device 35 may sequentially emit R, G, and B light components.

This is realized by the following method: the frequency control unit 66 sequentially controls the start/stop of the oscillation of microwaves from the microwave oscillators 10 corresponding to the light emitting members CoR, CoG, and CoB so that the light emitting members CoR, CoG, and CoB sequentially emit R, G, and B light components.

An application of a projector when sequential control is performed on the light source device 35 will be described in a third embodiment.

The electrodeless lamp 101 concentrates light emitted from the light emitting members CoR, CoG, and CoB on the light radiating portion Emi2, but the invention is not limited thereto. For example, a light emitting area may be provided for each light emitting member, and each light emitting area may be independently used as a color light source.

This structure makes it possible to obtain the necessary amount of R, G, and B light components.

An application of a projector when light emitting areas are independently provided for the light emitting members CoR, CoG, and CoB of the light source device 35 will be described in a fourth embodiment.

As described above, according to this embodiment, the following effects are obtained in addition to the effects described in the first embodiment.
(1) The microwave oscillator 10 is a diamond SAW oscillator provided with a diamond SAW resonator. Therefore, the microwave oscillator 10 generates microwaves immediately after being supplied with power and thus can rapidly turn on the electrodeless lamp 101. In addition, the microwave oscillator 10 has a small size, high power resistance, and a small variation in frequency although the temperature varies.
   The microwave oscillated by the microwave oscillator 10 is amplified by the amplifying unit 11 and is then radiated from the antenna provided in the cavity 3. Therefore, the microwave is kept in the cavity 3.
   Therefore, the microwave does not leak to the outside of the cavity 3, which makes it possible to prevent the microwave from having an adverse effect on medical instruments or wireless communication apparatuses, such as WLAN, Home RF, Zigbee (registered trademark), and Bluetooth (registered trademark) used in an ISM band.
   Further, since the microwave oscillator 10 outputs a microwave having a peak around a predetermined frequency, the microwave oscillator 10 does not need extra microwave power.
   Furthermore, the light emitting members CoR, CoG, and CoB are provided for the corresponding microwave oscillators 10, and light emitting materials having different emission spectra are filled in the light emitting members CoR, CoG, and CoB. Therefore, the color light components necessary to project an image are emitted as color light components having a sharp characteristic.
   Therefore, it is possible to generate only necessary color light components with high efficiency.
   As a result, it is possible to provide the projector 200 having the light source device 35 having high energy efficiency and capable of being rapidly turned on.
(2) The optical waveguides Ref2 for guiding light components emitted from the light emitting members CoR, CoG, and CoB to the light radiating portion Emi2 are provided for the light emitting members CoR, CoG, and CoB. Therefore, light components emitted from the light emitting members CoR, CoG, and CoB are emitted from the light radiating portion Emi2.
   Therefore, when all the light emitting members CoR, CoG, and CoB emit light components, a combination of the light components is emitted from the light radiating portion Emi2. Therefore, it is possible to use the same optical structure as a lamp emitting substantially white light. In addition, the light source device having the light emitting members CoR, CoG, and CoB that sequentially emit light components can be used as a light source of a field sequential type.
   Thus, the invention can be applied to various optical types of projectors, and thus the convenience of the light source device 35 is improved.
   As a result, it is possible to provide the projector 200 including the light source device 35 that is convenient for use.
(3) The light source device 35 includes the frequency control unit 66 for adjusting the frequencies of the microwaves oscillated by the microwave oscillators 10. Therefore, the light source device 35 can adjust the frequencies of microwaves such that the light emitting members corresponding to the microwave oscillators 10 emit light with the maximum efficiency.
   As a result it is possible to provide the projector 200 including the light source device 35 having high energy efficiency.
(4) The light source device 35 includes the power control unit 12 for adjusting the amplification factor of each of the amplifying units 11. Therefore, the light source device 35 can adjust microwave power such that the light emitting members corresponding to the microwave oscillators 10 emit light with the maximum efficiency.
   As a result it is possible to provide the projector 200 including the light source device 35 having high energy efficiency.
(5) The light source device 35 includes the power control unit 12 for adjusting the amplification factor of each of the amplifying units 11. Therefore, the light source device 35 can adjust microwave power such that the light emitting members corresponding to the microwave oscillators 10 emit light with the maximum efficiency.
   As a result it is possible to provide the projector 200 including the light source device 35 having high energy efficiency.
(6) Each of the isolators 13 is provided in the latter stage of the corresponding amplifying unit 11 to shield a reflected wave. Therefore, the isolator 13 can prevent the reflected wave from returning to the amplifying unit 11.
   Thus, the isolator 13 can protect the amplifying unit 11 and the microwave oscillator 10 provided in the previous stage thereof from the reflected microwave.
   As a result, according to this embodiment of the invention, it is possible to provide the projector 200 including the light source device 35 capable of stably operating.
(7) The light source device 35 includes the frequency control unit 66 and the amplifying units 11. Therefore, the light source device 35 can emit a necessary amount of light having necessary spectral components of R, G, B spectral components.

In this way, the light source device 35 can emit ideal light for the light modulating devices including red, green, and blue spectral components respectively corresponding to the liquid crystal light valves 77R, 77G, and 77B. Similarly, even when other light modulating devices, such as tilt mirror devices or reflective liquid crystal display devices, are used, the light source device 35 can emit light having ideal spectral components for the light modulating devices.

As a result, it is possible to provide the projector 200 including the light source device 35 capable of emitting light having ideal spectral components.

### (Third embodiment)

### <First application of light source device>

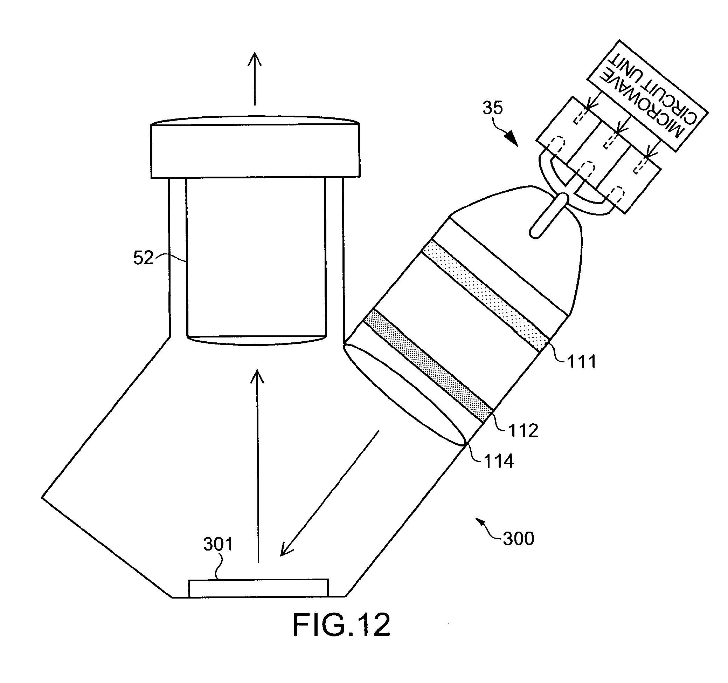

Fig. 12 is a diagram schematically illustrating the structure of a projector according to a third embodiment of the invention.

The schematic structure of a projector 300 that uses a tilt mirror device as a light modulating device and the light source device 35 according to the second embodiment as a light source will be described with reference to Figs. 8, 9, and 12.

In this embodiment, the same components as those in the first and second embodiments have the same reference numerals, and a detailed description thereof will be omitted.

The projector 300 uses a digital micromirror device (DMD; made by Texas Instruments Inc.), which is a single tilt mirror device, as a light modulating device.

The projector 300 includes a light source device 35, a first lens array 111, a second lens array 112, a superimposing lens 114, a DMD 301, and a projection lens 52.

Light emitted from the light source device 35 passes through the first lens array 111 and the second lens array 112 to have uniform illuminance, and then passes through the superimposing lens 114. Then, the light is incident on the DMD, thereby forming an image.

The DMD 301 is a light modulating device that reproduces contrast by changing the angle of a plurality of small mirrors arranged in a lattice shape several thousand times or more per second in response to image signals to turn on or off the small mirrors.

The projector having a single DMD according to the related art uses a light source device for emitting substantially white light, and thus needs to have a rotary member including R, G, and B color filters, called color wheels, in order to obtain R, G, and B light components from the white light. Accurate rotation control needs to be performed on the color wheel, and the color wheel occupies a large area in the projector.

The projector 300 controls the light source device 35 so that the light source device 35 sequentially emits R, G, and B light components. Further, image signal information corresponding to the color light components is transmitted to the DMD 301 in synchronization with the time when the color light components are switched.

Then, the DMD 301 sequentially reflects modulated light, that is, the R, G, and B light components forming an image.

The projection lens 52 enlarges the modulated light from the DMD 301 and projects the enlarged light onto the screen.

The projected image is displayed by sequentially projecting the R, G, and B light components. However, the R, G, and B light components incident on the human eye are superimposed in the brain by the residual image phenomenon of the human eye (brain) so that a viewer views a full color image by the three primary color principle of light.

As described above, according to this embodiment, the following effects are obtained in addition to the effects of the above-described embodiments.
(1) The projector 300 uses the DMD 301 as a light modulating device and deals with all light components regardless of the polarization of light. Therefore, the projector 300 does not need the incident-side polarizing plate 82, the emission-side polarizing plate 83, and the polarizing element 113 of the optical unit in the first embodiment.

Further, the projector 300 does not need the color wheel, unlike the projector according to the related art including a light source device for emitting substantially white light that needs the color wheel.

Accordingly, it is possible to simplify the structure of an optical system and thus to achieve a projector having a small size. In addition, it is possible to reduce the number of driving parts and thus improve the reliability of the projector.

As a result, it is possible to provide a projector having a small size and high reliability.

### (Fourth embodiment)

### <Second application of light source device>

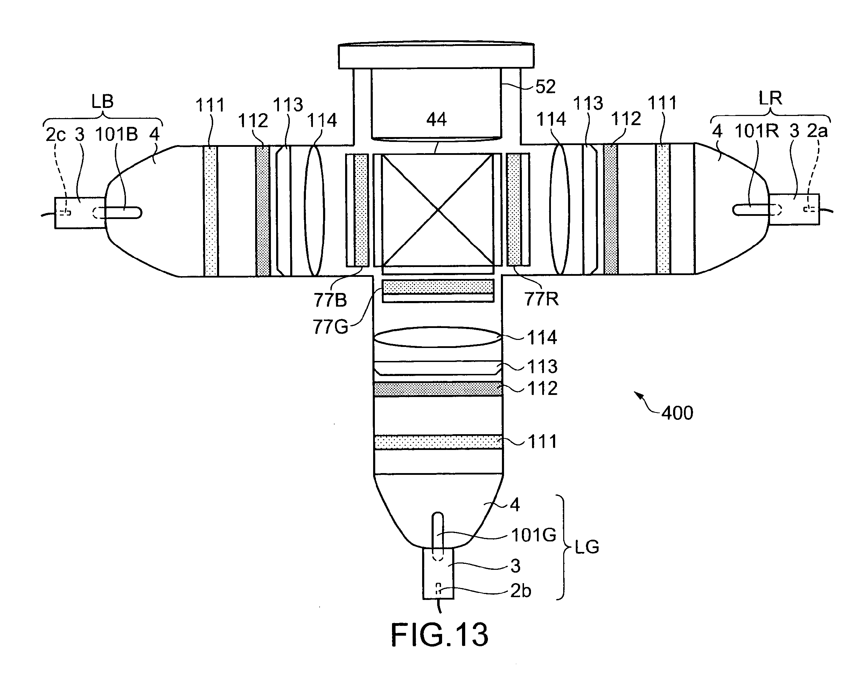

Fig. 13 is a diagram schematically illustrating the structure of a projector according to a fourth embodiment of the invention.

In this embodiment, light emitting areas are provided for the light emitting members CoR, CoG, and CoB of the electrodeless lamp 101 according to the second embodiment, and the light emitting areas are independently used as electrodeless lamps. The schematic structure of a projector 400 using the electrodeless lamps for R, G, and B light components will be described below with reference to Figs. 9, 10, and 13.

In the fourth embodiment, the same components as those in the first and second embodiments have the same reference numerals, and a description thereof will be omitted.

The projector 400 includes lamp bodies LR, LG, and LB, first lens arrays 111, second lens arrays 112, polarizing elements 113, and superimposing lenses 114, liquid crystal light valves 77R, 77G, and 77B, a combining optical system 44, and a projection lens 52.

The lamp body LR includes an electrodeless lamp 101R, an antenna 2a, a cavity 3, and a reflector 4.

The electrodeless lamp 101R is an independent electrodeless lamp that emits a red light component and includes the light emitting member CoR of the electrodeless lamp 101 according to the second embodiment and the light radiating portion Emi2 integrally formed with the light emitting member CoR in a cylindrical shape.

The antenna 2a, the cavity 3, and the reflector 4 have the same structures as those in the light source device 35. The antenna 2a is connected to the microwave oscillator 28 (not shown) of the light source device 35 through a cable.

The structure of the lamp bodies LG and LB is similar to the structure of the lamp body LR except that the light emitting member CoG of the electrodeless lamp 101G emits a green light component and the light emitting member CoB of the electrodeless lamp 101B emits a blue light component.

The first lens array 111, the second lens array 112, the polarizing element 113, and the superimposing lens 114 are provided for each of the optical paths of the lamp bodies LR, LG, and LB. The first lens arrays 111, the second lens arrays 112, the polarizing elements 113, and the superimposing lenses 114 make the illuminance of the R, G, and B light components nearly uniform, polarize the R, G, and B light components in a predetermined direction, and cause the polarized light components to be incident on the corresponding liquid crystal light valves 77R, 77G, and 77B.

The combining optical system 44 combines color light components modulated by the liquid crystal light valves 77R, 77G, and 77B into modulated light for forming a full color image in response to image signals and emits the modulated light.

The projection lens 52 enlarges the modulated light and projects the enlarged light onto the screen.

As described above, according to this embodiment, the following effects are obtained in addition to the effects of the above-described embodiments.
(1) The lamp bodies LR, LG, and LB emit R, G and B light components, respectively. Therefore, it is unnecessary to separate light into R, G, and B color light components, and thus the color separating optical system 42 according to the first embodiment that includes two dichroic mirrors 121 and 122 and the reflecting mirror 123 is not needed.
   Thus, it is possible to shorten the length of an optical path.
   As a result, it is possible to provide the projector 400 having a small size.
(2) The power control unit 14 adjusts the quantity of R, G, and B light components respectively emitted from the lamp bodies LR, LG, and LB to a predetermined value. Therefore, it is possible to directly adjust the color of a projected image while viewing the projected image.

Therefore, it is possible to provide the projector 400 capable of obtaining a clear projected image.

The invention is not limited to the above-described embodiments, and various modifications and changes of the invention can be made without departing from the scope of the invention. For example, the following modifications can be made.

### (First modification)

A first modification will be described with reference to Fig. 8. In the above-described embodiments, the light source device 30 or the light source device 35 is provided in the projector, but the invention is not limited thereto.

For example, since the light source device 30 is rapidly and reliably turned on, can stably obtain a desired quantity of light, and has a small size and a light weight, it may be applied to illuminating devices for airplanes, ships, and vehicles and interior illuminating devices.

### (Second modification)

A second modification will be described with reference to Fig. 8. In the first embodiment, the projector 100 is a projector of a three-liquid-crystal-panel type that uses three liquid crystal light valves 77R, 77G, and 77B as light modulating devices, but the invention is not limited thereto.

For example, the projector may use as a light modulating device a single liquid crystal light valve that has red, green, and blue color filters arranged in a matrix and emits full-color modulated light. Alternatively, the projector may use a reflective liquid crystal display device or a tilt mirror device as a light modulating device.

For example, when the tilt mirror device is used, the incident-side polarizing plate 82, the emission-side polarizing plate 83, and the polarizing element 113 are not needed. Therefore, the structure of an optical system is different from that shown in Fig. 8 according to a light modulating device used.

A rear projector including the above-mentioned light modulating device and a screen may be used.

These structures also make it possible to obtain the same effects as described in the embodiments.

### (Third modification)

A third modification will be described with reference to Fig. 5. In the first embodiment, the light radiating area Emi and the light emitting areas Spo of the electrodeless lamp 1 are provided so as to extend in the opposite direction, but the invention is not limited thereto. For example, the electrodeless lamp may include a plurality of light emitting areas and one light radiating area.

For example, a plurality of light emitting areas and a light radiating area may be provided in a trefoil shape or a starfish shape with the light radiating area disposed at the center thereof.

Further, similarly, a plurality of light emitting members and one light radiating portion may be provided in the electrodeless lamp 101 according to the second embodiment.

These structures also make it possible to obtain the same effects as described in the first and second embodiments.

As described above, according to the invention, it is possible to provide a projector including a light source device that is rapidly turned on and emits light with high energy efficiency.

The entire disclosure of Japanese Patent Application No. 2005-318030, filed November 1, 2005 is expressly incorporated by reference herein.

## Claims

1. A projector for projecting an image on the basis of image information, comprising:
a light source device that is used as a light source for the projected image and includes:
a plurality of solid-state high-frequency oscillators that generate microwaves;
a phase control unit that adjusts each of the phases of the microwaves output from the solid-state high-frequency oscillators;
amplifying units that amplify the microwaves whose phases have been adjusted by the phase control unit; and
a light emitting body that has a material emitting light by the microwaves filled therein,
wherein two or more microwaves having different phases that are output from the amplifying units are radiated onto the light emitting body.

2. The projector according to claim 1,
wherein light emitting areas onto which a plurality of microwaves having different phases are radiated are provided in the light emitting body so as to correspond to the solid-state high-frequency oscillators, and
the inner spaces of the light emitting body including the plurality of light emitting areas communicate with each other.

3. The projector according to claim 2,
wherein the light emitting body includes a light radiating area that emits light to be used to form the projected image,
the light emitting areas are radially branched from the light radiating area, and
optical waveguides that guide light emitted from the light emitting areas to the light radiating area are provided at optical ends of the light emitting areas.

4. The projector according to claims 1,
wherein n (n is an integer equal to or greater than 2) pairs of solid-state high-frequency oscillators and amplifying units are provided, and
the phase control unit adjusts the phases of the microwaves output from the solid-state high-frequency oscillators such that the microwaves have a phase difference of (2π)/n.

5. The projector according to claim 4,
wherein the integer n is 3.

6. A projector for projecting an image on the basis of image information, comprising:
a light source device that is used as a light source for the projected image and includes:
a plurality of solid-state high-frequency oscillators that generate microwaves;
amplifying units that are provided so as to correspond to the solid-state high-frequency oscillators and amplify the microwaves generated by the solid-state high-frequency oscillators; and
a plurality of color light emitting bodies that have materials emitting light by the microwaves filled therein,
wherein the plurality of color light emitting bodies are provided so as to correspond to the amplifying units, and the light emitting materials having different emission spectra are filled in the color light emitting bodies.

7. The projector according to claim 6,
wherein the light source device further includes a light radiating portion that emits light to be used to form the projected image,
the color light emitting bodies are radially branched from the light radiating portion and are integrally formed with the light radiating portion, and
optical waveguides that guide light emitted from the color light emitting bodies to the light radiating portion are provided at optical ends of the color light emitting bodies.

8. The projector according to claim 6,
wherein the light source device further includes a frequency control unit that adjusts the frequencies of the microwaves generated by the solid-state high-frequency oscillators.

9. The projector according to claims 6,
wherein the light source device further includes a power control unit that adjusts an amplification factor of each of the amplifying units.

10. The projector according to claims 1,
wherein the light source device further includes:
antennas that are provided in the respective amplifying units and radiate the microwaves amplified by the amplifying units;
cavities that are provided for the respective antennas, accommodate at least some of the light emitting body or the color light emitting bodies and the antennas therein and reflect the microwaves; and
isolators that are provided between the amplifying units and the antennas and prevent some of the microwaves that have been radiated from the antennas and reflected from the cavities from returning to the antennas.

11. The projector according to claims 1,
wherein the plurality of solid-state high-frequency oscillators are surface acoustic wave oscillators having surface acoustic wave resonators, and
each of the surface acoustic wave resonators includes a first layer that is formed of diamond or diamond-like carbon, a piezoelectric layer that is formed on the first layer, and a comb-shaped electrode that is formed on the piezoelectric layer.

12. The projector according to claims 1, further comprising:
light modulating devices,
wherein the image information is image signals for defining an image,
each of the light modulating devices modulates light emitted from the light source device on the basis of the image signals to generate modulated light for forming an image, and
the light modulating device is any one of a transmissive liquid crystal panel, a reflective liquid crystal panel, and a tilt mirror device.

13. The projector according to claims 1,
wherein the microwaves are signals in a frequency band of 300 MHz to 30 GHz.
